(19) Europäisches Patentamt
European Patent Office
Office européen des brevets

(11) Publication number: **0 477 899 A2**

(12) **EUROPEAN PATENT APPLICATION**

(21) Application number: **91116332.7**

(22) Date of filing: **25.09.91**

(51) Int. Cl.5: **C08L 75/04**, C08F 283/00, C08F 299/00

(30) Priority: **26.09.90 JP 258195/90**

(43) Date of publication of application: **01.04.92 Bulletin 92/14**

(84) Designated Contracting States: **DE FR GB**

(71) Applicant: **KANEGAFUCHI KAGAKU KOGYO KABUSHIKI KAISHA**
**2-4 Nakanoshima 3-chome**
**Kita-ku Osaka-shi(JP)**

(72) Inventor: **Kawamura, Jo**
**157-50, Nishi Futami, Futami-cho**
**Akashi-shi, Hyogo(JP)**
Inventor: **Hagiwara, Kazuo**
**1-414, Minami Goyo-cho 1-chome**
**Kita-ku, Kobe-shi, Hyogo(JP)**
Inventor: **Wakabayashi, Hiroshi**
**B-102, 8, Maikodai 2-chome**
**Tarumi-ku, Kobe-shi, Hyogo(JP)**

(74) Representative: **Vossius & Partner**
**Siebertstrasse 4 P.O. Box 86 07 67**
**W-8000 München 86(DE)**

(54) **Curable composition.**

(57) A curable composition containing (A) 100 parts by weight of a urethane prepolymer, (B) from 0.01 to 20 parts by weight of a photocurable substance, and (C) from 0.1 to 20 parts by weight of an unsaturated compound reactive to oxygen present in air, provides cured elastomers having improved antifouling and cracking resistance properties.

EP 0 477 899 A2

The present invention relates to a curable composition containing a urethane prepolymer. More particularly, it relates to a curable composition which can give cured elastomers improved in the property of not suffering surface fouling caused by the deposition fouling agents (i.e., dust particles and other substances) and in the property of resistance to cracking caused by deterioration in weathering.

Urethane prepolymer-containing compositions can readily react, for example, with moisture in air or with compounds having active hydrogen to give rubbery substances, and are usable, for example, as a sealing material for buildings.

However, depending on the curing conditions, such compositions progress to an undesirable state because the surfaces of the cured compositions are fouled by the adhesion of dust particles and other substances (hereinafter, the property of not suffering such fouling is referred to as "antifouling properties").

Further, since cured elastomers formed from these compositions have poor weatherability and, hence, develop cracks on the surfaces thereof within relatively short time periods in outdoor exposure or accelerated weathering tests, problems occur in long-term use thereof in applications such as working joints which undergo relatively large movements, and sidings.

In order to eliminate the above-described defects, various compositions and fouling-preventive measures have been proposed so far. For example, for the purpose of overcoming the problems, the composition proposed in JP-A-56-122822 (the term "JP-A" as used herein means an "unexamined published Japanese patent application") comprises a urethane prepolymer and a photocurable resin incorporated therein, and the fouling-preventive measure proposed in JP-A-1-201386 comprises coating an antifouling barrier primer on a cured urethane prepolymer.

Although the above composition and fouling-preventive measures were found to produce a certain degree of effects, they still have been defective in that the composition is apt to suffer fouling when applied to building parts which are in the shadow and upon which sunlight does not strike, while the fouling-preventive measure has poor working efficiency because it necessitates coating of the expensive barrier primer after application of the sealing material.

Accordingly, an object of the present invention is to provide a curable composition which shows remarkable antifouling properties and improved weatherability and eliminates the above-described problems.

The curable composition of the present invention comprises (A) 100 parts by weight of a urethane prepolymer, (B) from 0.01 to 20 parts by weight of a photocurable substance, and (C) from 0.1 to 20 parts by weight of an unsaturated compound reactive to oxygen in air.

The urethane prepolymer employed in the present invention is a composition obtained by the reaction between a polyol and an excess of an isocyanate and containing unreacted isocyanate groups.

This urethane prepolymer may be used alone as a one-pack type, or it may alternatively be used as a two-pack type which is a combination with a polyol.

Examples of the isocyanate include aromatic isocyanates such as tolylene diisocyanate, xylylene diisocyanate and diphenylmethane diisocyanate; alicyclic isocyanates such as hydrogenated tolylene diisocyanate, isophorone diisocyanate, hydrogenated xylylene diisocyanate and hydrogenated diphenylmethane diisocyanate; and aliphatic isocyanates such as hexamethylene diisocyanate and 2,2,4-trimethylhexamethylene diisocyanate.

Examples of the polyol include poly(oxypropylene) polyols, polyester polyols, polyacrylic polyols and monomeric polyols such as ethylene glycol. However, the polyol is not limited to these.

The reaction between an isocyanate and polyol for producing a urethane prepolymer is not particularly limited, and may be conducted according to an ordinary method. For example, a dehydrated solvent, a slight amount of an organotin compound as catalyst, and the polyol and isocyanate are introduced into a nitrogen atmosphere in a reactor, and reaction is conducted with heating for a few hours, whereby a urethane prepolymer can be easily obtained.

The photocurable substance employed in the present invention is one in which the molecular structure thereof is chemically changed within a considerably short time period by the action of light and which, therefore, undergoes a physical change such as curing. Known substances of this kind are a variety of compounds and materials including organic monomers, oligomers, and resins and compositions containing these, and an arbitrarily selected commercial product may be adopted. Representative compounds that can be used as the photocurable substance are an unsaturated acrylic compound, poly(vinyl cinnamate) or a derivative thereof and an azido-resin.

The unsaturated acrylic compound is a monomer or oligomer having one to several acrylically or methacrylically unsaturated groups, or is a mixture of two or more of such monomers and oligomers. Examples thereof include monomers such as propylene (or butylene, ethylene) glycol di(meth)acrylate, neopentyl glycol di(meth)acrylate, and the like and oligoesters thereof having molecular weights of 10,000

or less.

The poly(vinyl cinnamate) or its derivative is a photosensitive resin having a cinnamoyl group as a photosensitive group. Examples thereof include polymers obtained by esterifying poly(vinyl alcohol) with cinnamic acid, and further include polymers of various vinyl cinnamate derivatives.

The azido-resin is one known as a photosensitive resin having an azido group as a photosensitive group. Examples thereof include photosensitive liquid rubbers ordinarily containing diazido-compounds as photosensitizers. Further specific examples thereof are shown in "Photosensitive Resins" (issued from Publishing Department, the Printing Society, Japan on March, 17, 1972, pp. 93 et seq., 106 et seq., 117 et seq.). These azido-resins may be used alone or as a mixture of two or more thereof. If required and necessary, a sensitizer may be added thereto.

The amount of the photocurable substance employed in the curable composition of the present invention is preferably from 0.01 to 20 parts by weight per 100 parts by weight of the urethane prepolymer. If the amount of the photocurable substance is below 0.01 part by weight, the effects of the invention are weakened. If the amount thereof exceeds 20 parts by weight, there are cases where properties of the resulting composition are adversely affected. The effects of the invention can, in some cases, be further enhanced by incorporation of a sensitizer such as a ketone or nitro-compound or an accelerator such as an amine.

The unsaturated compound reactive to oxygen in air, employed in the curable composition of the present invention, is a compound which can react with oxygen in air to thereby remove the oxygen present near the surface of the composition being cured. An example of the unsaturated compound is an air oxidation-type curable substance which generally is a compound having in the molecule thereof unsaturated groups that cause polymerization by the action of oxygen in air. Specific examples thereof include drying oils including tung oil and linseed oil; various kinds of alkyd resins obtained by modifying such drying oils; drying oil-modified acrylic polymers, epoxy resins, and silicone resins; poly(1,2-butadiene), poly(1,4-butadiene), polymers and copolymers of $C_5$-$C_8$ dienes, and modified products obtained by modifying these polymers and copolymers with various modifiers (such as maleic acid or anhydride and boiled oils). Particularly preferred of these are tung oil, diene-based polymers in a liquid state (diene-based liquid polymers), and modification products of the polymers.

Specific examples of the diene-based liquid polymer include liquid polymers obtained by polymerizing or copolymerizing diene compounds such as butadiene, chloroprene, isoprene and 1,3-pentadiene, polymers such as NBR and SBR which are obtained by copolymerizing major proportions of such diene compounds with minor proportions of other monomers copolymerizable therewith such as acrylonitrile and styrene, and modified polymers obtained by modifying these polymers with various modifiers (such as maleic acid or anhydride and boiled oils). These may be used alone or in combination of two or more thereof. Preferred of these diene-based liquid polymers is liquid polybutadiene.

The above-described unsaturated compounds reactive to oxygen in air may be used alone or in combination of two or more thereof. In some cases, the effects of the present invention can be further enhanced if the unsaturated compound reactive to oxygen in air is used in combination with a catalyst or metallic drier which accelerates the oxidation curing reaction. Examples of such a catalyst and metallic drier include metal salts such as cobalt naphthenate, lead naphthenate, zirconium naphthenate, cobalt octylate, and zirconium octylate, and amine compounds.

In the composition of the present invention, the incorporated amount of the unsaturated compound reactive to oxygen in air is preferably from 0.1 to 20 parts by weight, more preferably from 1 to 10 parts by weight, per 100 parts by weight of the urethane prepolymer. If the amount of the unsaturated compound used is below 0.1 part by weight, the effect brought about by use of the unsaturated compound reactive to oxygen in air, i.e., improvement in antifouling properties, cannot be produced sufficiently. If the amount thereof exceeds 20 parts by weight, the tensile properties and other properties of cured elastomers obtained from the resulting composition tend to be impaired.

If required and necessary, a curing catalyst, plasticizer, filler, and other additives or ingredients may be added to the composition of the present invention before use.

Examples of the curing catalyst include tin compounds such as tin octylate and dibutyltin dilaurate, and amines such as triethylenediamine and N-ethylmorpholine. In the case of a two-pack type, a compound having active hydrogen, such as a polyether polyol, may be used as a curing agent.

Specific examples of the plasticizer include phthalic esters such as dibutyl phthalate, diheptyl phthalate, di(2-ethylhexyl) phthalate, butyl benzyl phthalate, and butylphthalyl butyl glycolate; non-aromatic dibasic acid esters such as dioctyl adipate and dioctyl sebacate; and phosphoric esters such as tricresyl phosphate and tributyl phosphate.

The plasticizer may also be one having a relatively high molecular weight, and examples thereof include

polyesters of dibasic acids with dihydric alcohols; polyethers such as poly(propylene glycol) and derivatives of such polyethers; polymers of styrene and its derivatives such as poly-α-methylstyrene and polystyrene. These may be used alone or as a mixture thereof.

Examples of the filler include heavy calcium carbonate, light calcium carbonate, gelatinous calcium carbonate, kaolin, talc, silica, titanium oxide, aluminum silicate, magnesium oxide, zinc oxide and carbon black.

Examples of the other additives include hydrogenated castor oil, anti-sag agents such as organic bentonite, colorants, anti-aging agents, and adhesion improvers.

The thus-obtained composition of the present invention can be advantageously used as an adhesive, pressure-sensitive adhesive, coating composition, waterproofing agent for coatings, sealing composition, modeling material, casting rubber material, or foaming material. Of these, the composition is particularly useful in sealing applications.

As described above and as will be demonstrated by the following Examples, the curable composition of the present invention shows extraordinary antifouling properties and improved weatherability over a prolonged period of time.

Since these effects are not affected by whether sunlight strikes upon the applied composition or not, use of the curable composition as a sealing material is of high practical value particularly when it is used for buildings in densely built-up areas and applied to building parts in the shadow upon which sunlight does not strike.

Furthermore, because the curable composition also has excellent workability, application thereof as a sealing material does not require any high degree of technique.

The present invention will be explained below in more detail with reference to the following Examples, which should not be construed to be limiting the scope of the invention.

## EXAMPLE 1

A urethane prepolymer having an NCO content of 2.64% and obtained by reacting 1 mol of a trifunctional polyether polyol (OHV = 42), 1 mol of a bifunctional polyether polyol (Hydroxy value (OHV)-= 37), and 5 mol of tolylene diisocyanate was used as a base material.

On the other hand, 55 parts by weight (hereinafter referred to as "parts") of a bifunctional polyether polyol (OHV = 56), 30 parts of rutile titanium oxide, 0.5 part of carbon black, 100 parts of calcium carbonate, 6 parts of hydrogenated castor oil, 1 part of a thiourea derivative, 5 parts of a polyfunctional oligoester acrylate (trade name Aronix M-8060, manufactured by Toagosei Chemical Industry Co., Ltd., Japan), and 5 parts of tung oil were sufficiently mixed and kneaded to give a curing agent.

Subsequently, the base material and curing agent in a proportion of 1:2 by weight were sufficiently mixed together by means of a spatula, and the resulting composition was formed into sheets having a thickness of about 5 mm. These sheets were subjected to outdoor exposure (facing south with a slant of 45 degrees) in such a manner that sunlight struck upon part of the sheets but not upon the remaining part thereof. Thus, the test pieces in the two cases were examined for surface fouling (antifouling properties) and cracks due to deterioration (cracking resistance).

For the purpose of comparison, sheets were prepared and subjected to an outdoor exposure test in the same manner as in Example 1 except that tung oil was not incorporated into the curing agent (Comparative Example 1) or tung oil and the polyfunctional oligoester acrylate were not incorporated into the curing agent (Comparative Example 2).

The results obtained are summarized in Table 1.

Aronix M-8060 used above as a photocurable substance has the following structure.

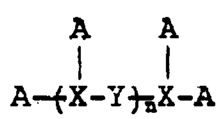

(A is acrylic acid, X is polyhydric alcohol, and Y is polybasic acid)

Table 1

| | | Antifouling properties | | | | Cracking resistance | | | |
|---|---|---|---|---|---|---|---|---|---|
| | | After 1 month | After 3 months | After 6 months | After 12 months | After 1 month | After 3 months | After 6 months | After 12 months |
| Example 1 | with sunlight | ◎ | ◎ | ◎ | ○ | ◎ | ◎ | ○ | ○ |
| | without sunlight | ◎ | ◎ | ◎ | ○ | ◎ | ◎ | ○ | ○ |
| Comparative Example 1 | with sunlight | ◎ | ◎ | ◎ | ○ | ◎ | ◎ | ○ | ○ |
| | without sunlight | ○ | ○ | Δ | Δ | ◎ | ○ | ○ | Δ |
| Comparative Example 2 | with sunlight | ○ | Δ | Δ | X | Δ | Δ | X | X |
| | without sunlight | ○ | Δ | Δ | X | ○ | Δ | Δ | X |

◎: Almost no change was observed.
○: Slight change was observed.
Δ: Clear change was observed.
X: Considerable fouling (darkening of the test piece surface due to adhesion of dust particles etc.) or considerable cracking (cracks extending from the test piece surface to inner parts thereof) was observed.

As apparent from Table 1, the sheets obtained from the curable composition of Example 1 which contained an oligoester acrylate (a photocurable substance) and tung oil (an unsaturated compound reactive to oxygen in air) showed excellent antifouling properties and cracking resistance over a prolonged period of time compared to the sheets obtained from the composition of Comparative Example 2 which did not contain the two ingredients.

The results in Table 1 further show that as compared with the sheets of Comparative Example 1 obtained using the curing agent containing the oligoester acrylate but not containing tung oil, the sheets of Example 1 showed excellent antifouling properties and cracking resistance particularly in the case where sunlight did not strike thereupon. The reason for this is that even without sunlight, an antifouling film is formed by the action of the tung oil.

EXAMPLES 2 TO 5

The same procedures as in Example 1 were repeated except that the incorporated amount or kind of the photocurable substance and that of the unsaturated compound reactive to oxygen in air were changed. The results obtained are summarized in Table 2.

Table 2

| | Photocurable substance (parts) | Unsaturated compound reactive to oxygen (parts) | Exposure conditions | Antifouling properties After 1 month | After 3 months | After 6 months | After 12 months | Cracking resistance After 1 month | After 3 months | After 6 months | After 12 months |
|---|---|---|---|---|---|---|---|---|---|---|---|
| Example 2 | Aronix M-8060 (3) | tung oil (10) | with sunlight | ◎ | ◎ | ◎ | ○ | ◎ | ◎ | ○ | ○ |
| | | | without sunlight | ◎ | ◎ | ◎ | ○ | ◎ | ◎ | ○ | ○ |
| Example 3 | Aronix M-8060 (10) | tung oil (3) | with sunlight | ◎ | ◎ | ◎ | ○ | ◎ | ◎ | ○ | ○ |
| | | | without sunlight | ◎ | ◎ | ◎ | ○ | ◎ | ◎ | ○ | ○ |
| Example 4 | Aronix M-309 (5) | R-15HT (5) | with sunlight | ◎ | ◎ | ◎ | ○ | ◎ | ◎ | ○ | ○ |
| | | | without sunlight | ◎ | ◎ | ◎ | ○ | ◎ | ◎ | ○ | ○ |
| Example 5 | Aronix M-400 (5) | Polyoil LCB-110 (5) | with sunlight | ◎ | ◎ | ◎ | ○ | ◎ | ◎ | ○ | ○ |
| | | | without sunlight | ◎ | ◎ | ◎ | ○ | ◎ | ◎ | ○ | ○ |

Note) Criteria for evaluating antifouling properties and cracking resistance are the same as in Table 1.

All the photocurable substances shown in Table 2 are oligoester acrylates manufactured by Toagosei Chemical Industry Co., Ltd. and respectively have the following structures.

Aronix M-8060: (as specified above)

Aronix M-309 :

$(CH_2=CHCOOCH_2)_3CCH_2CH_3$

Aronix M-400 :

$[(CH_2=CHOOCH_2)_3CCH_2]_2O$

Of the unsaturated compounds reactive to oxygen in air as shown in Table 2, R-15HT (manufactured by Idemitsu Petrochemical Co., Ltd., Japan) is a mixture of liquid poly(1,4-butadiene) and liquid poly(1,2-butadiene) both having a number-average molecular weight of 1,000, and Polyoil LCB-110 (manufactured by Huls AG) is liquid poly(1,4-butadiene) having a number-average molecular weight of 1,600.

EXAMPLE 6

100 Parts of a one-pack type, moisture-curing urethane prepolymer (trade name Hiprene AX-613, manufactured by Mitsui Nisso Urethane Co., Ltd., Japan) having an NCO content of 2.4%, 10 parts of dibutyl phthalate, 40 parts of talc, 5 parts of rutile titanium oxide, 0.1 part of carbon black, 0.5 part of nickel dibutylcarbamate, 0.1 part of dibutyltin dilaurate, 10 parts of poly(vinyl cinnamate) having a polymerization degree of 500, and 5 parts of linseed oil were dehydrated and mixed under vacuum using a vacuum kneader.

The thus-obtained curable composition showed excellent antifouling properties and cracking resistance equal to those shown in Examples 1 to 5, and could be used as a useful sealing material.

**Claims**

**1.** A curable composition comprising
(A) 100 parts by weight of a urethane prepolymer,
(B) from 0.91 to 20 parts by weight of a photocurable substance, and
(C) from 0.1 to 20 parts by weight of an unsaturated compound reactive to oxygen in air.

**2.** A curable composition as claimed in claim 1, wherein said photocurable substance (B) is at least one member selected from the group consisting of unsaturated acrylic compounds, poly(vinyl cinnamate) and derivatives thereof, and azido-resins.

**3.** A curable composition as claimed in claim 1 or 2, wherein said unsaturated compound reactive to oxygen in air (C) is at least one member selected from the group consisting of diene-based polymers, drying oils, and modification products thereof.